# EUROPEAN PATENT APPLICATION

(11) **EP 1 712 783 A1**
(43) Date of publication of application: **18.10.2006**
(21) Application number: 05008006.8
(22) Date of filing: 13.04.2005
(51) Int. Cl.: F03B 13/12

(54) **Wave energy converter**

(71) Applicant: Duda, Jaroslav, 92101 Piestany (SK)
(72) Inventor: Duda, Jaroslav, 92101 Piestany (SK)

(57) **Abstract**

This invention - equipment utilizing see waves for drive of pumps, or drive of other energy producing tools is based on a principle of utilization of different hydrostatic pressures on the body during wave movement. These pressures in cooperation with self weight of the body cause repeated vertical motion of the part of the whole system. This motion can be used for see water pumping, or other kind of utilization of this motion. With proper choice of sizes, dimensions and construction of separate parts of the equipment is possible to control values of forces engaged in the system and having influence on the system. Author of this invention - Jaroslav Duda is structural engineer graduated from Slovak technical university in Bratislava Slovak republic in 1984.

## Description

### b) technical area which the invention is referring to ( cross reference to related application ):

General industry, energy production.

### c) this invention was not developed by help of Federally Sponsored Research or Development

### d) this material can be sent to USPTO via e - mail in electronic form

### e) characteristic of up to now technical knowledge ( background of the invention ):

Up to now known attempts to utilize see waves for energy production dealt mostly with utilization of kinetic energy of see waves. This invention is based on principle of utilization of the difference between hydrostatic pressures on the body during see waves movement. Up to now there is no known fabricator of equipment based on mentioned principle.

### f) explanation of the idea of invention ( brief summary of the invention ):

Equipment utilizing see waves for drive of pumps, or drive of other energy producing tools, consists from a reinforced concrete foundation, from central steel pipe anchored to it and from a hollow closed steel ring with a piston. The central steel pipe penetrates a steel ring through the ring's opening. The piston can move easily inside the central steel pipe. The whole system is installed into shallow see water near the coast, where good conditions exist and where good and regular see wave movement is observed during high tide with wave intensity app. 20 waves per minute. Self weight of the whole system secures the stability in the water during wave motion. Steel ring has small wheels installed on the surface of its inside steel wall, which are keeping it tight and stabile near the central steel pipe. It can't move to the sides, but can move just up and down along the central steel pipe in vertical direction. A piston with valves is attached to the steel ring and moves inside the central steel pipe. If the see is calm, the whole equipment doesn't work and the steel ring is plunged in the see water at a certain depth in balanced waterline position. When the see wave moves over the steel ring, during its highest amplitude, there is a hydrostatic pressure from the bottom to upper part of the ring. The ring strives to keep a balanced position and starts to move up. Valves on the piston are closed during the movement. The piston, which is attached rigidly to the steel ring acts like a pump piston. Lead in central pipe pushes the see water above itself into the pressure piping in upper part of central steel pipe and also sucks the water under the piston inside the central steel pipe. When the wave is over - behind the equipment ( the wave is coming to its lowest amplitude), the ring starts to move down due to influence of self weight. Valves on the piston are opened during down movement of the piston and water gets above the piston. During the next amplitude of the wave, the water above piston will be pushed inside the pressure piping again. This action is during wave movement still repeated. With various arrangements of foundation sizes, central steel pipe and ring sizes is possible to adapt the whole system to natural conditions and also to adapt the volume and pressure of water inside the pressure piping.
Advantages of described equipment are - easy and cheap fabrication and installation, possibility to produce so called " green "energy ( without negative impact to environment ), possibility to install a lot of units in one place and connect them into one system capable to pump big quantities of see water inside artificial lakes in higher locations on the coast and utilize them for turbine drive to produce electric power.
Disadvantages - doesn't produce energy when the see is calm and not possible to install it everywhere near the coast but in proper places.

### g) brief description of enclosed figures ( drawings ):

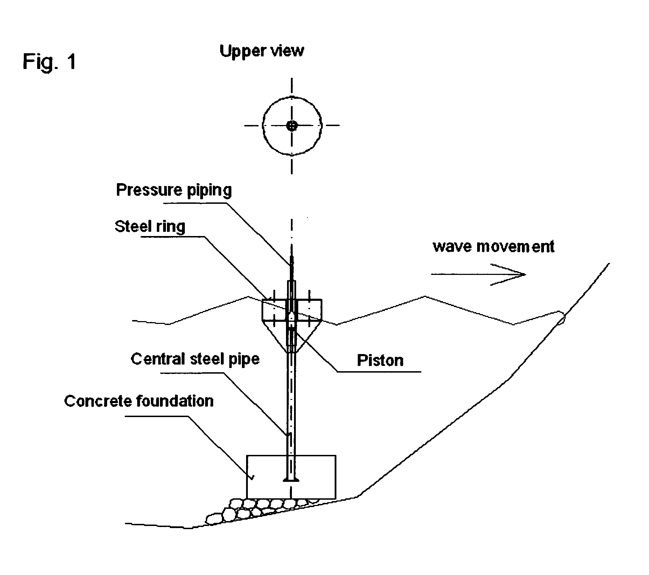

Figure 1 shows the equipment in approximately balanced stage, when one see wave already went over and the second is still approaching it. Steel ring, in this case, already went through its lowest position and started to move up. Valves on the piston are closed and the water above the piston is transported up to enter the pressure piping and further the water will spurt out of this piping to the atmosphere.

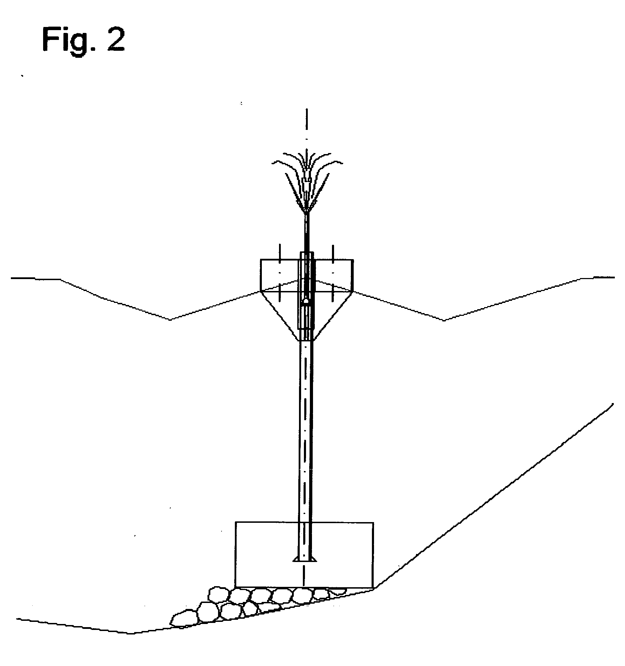

Figure 2 shows the equipment in when the see wave reached its highest amplitude and is in its highest position above the center of equipment. Steel ring, in this case, is also in its highest position, valves on the piston are closed and the water because it was pushed by the force F 1 spurts out from the pressure piping to the atmosphere. In case that behind orifice the pressure piping would continue and back flow valves would be installed into that piping, than this water would be possible to pump for longer distances and higher altitudes, because hydraulic pressures in the system P1 and P2 is possible to change with proper scale of dimensions of separate items of the whole system.

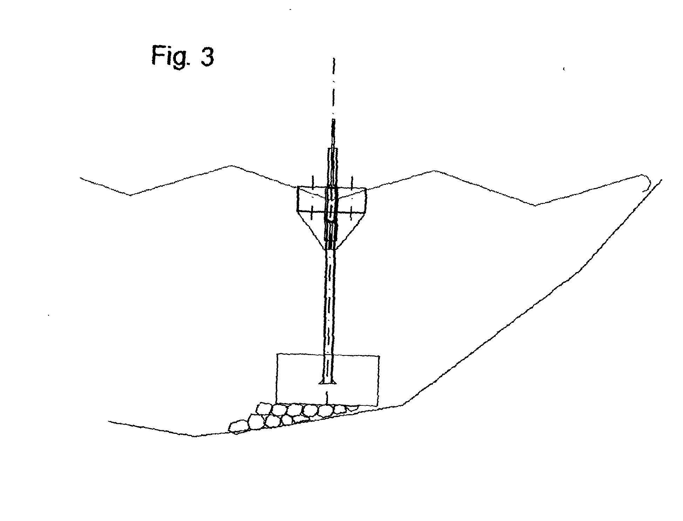

Figure 3 shows the equipment in position when the wave reached its lowest amplitude and is in lowest position above the center of equipment. Steel ring, in this case, is also in its lowest position. Valves on the piston just a moment ago opened ( during down movement of the piston ) will start to close on the beginning of the piston movement up. The see water flows above the piston through the openings in the central steel pipe. This water will be afterwards during next wave amplitude transported up to enter the pressure piping.

### h) description of at least one example of realized invention:

Author of this invention doesn't have proper conditions to fabricate the prototype, so the invention is described just in theoretical level.

### i) possibility of industrial usage of invention:

This invention can find a broad usage mostly in ocean countries. Its fabrication and installation is easy and cheap and it uses for its drive the energy of see waves, which was not used up to now and which is practically unlimited. If a lot of units would be installed in a proper area and one system from them would be created, this system would be capable to pump big quantities of see water inside artificial lakes in higher locations ( coast mountains ) during high tide wave movement and when the see is calm this water can flow down to drive a turbine to produce electric power, or this water can be lead directly from the pressure piping to another energy producing equipment, without building an artificial lake. The mass usage of this equipment can significantly help to homes located near the coast line, or to the whole coastal countries to be a self sufficient with energy.

## Claims

1. equipment utilizing see waves for drive of pumps, or drive of other energy producing tools.
Specialty of this invention is fact, that it is based on a principle of utilization of different hydrostatic pressures on the body during wave movement. These pressures in cooperation with self weight of the body cause repeated vertical motion of the part of the whole system. This motion can be used for see water pumping, or other kind of utilization of this motion mainly used for energy production. With proper choice of sizes, dimensions and construction of separate parts of the equipment is possible to control values of forces engaged in the system and having influence on the system.
Due to mentioned above I claim patent rights for equipment which uses see waves motion and difference in hydrostatic preassure during waves movement for pumping water, or other kind of energy production:

2. utilization of the difference in hydrostatic pressure ( direction up) in combination with self weight (direction down) during see waves movement to secure repeated vertical (generally also slanting and horizontal) motion of the part of equipment used for water pumping or other kind of energy production.
